# EUROPÄISCHE PATENTSCHRIFT

(11) **EP 2 756 238 B1**
(45) Veröffentlichungstag und Bekanntmachung des Hinweises auf die Patenterteilung: **18.03.2020**
(21) Anmeldenummer: 11757558.9
(22) Anmeldetag: 15.09.2011
(51) Int. Cl.: F24S 25/613, F24S 25/65

(54) **VORRICHTUNG ZUR BEFESTIGUNG EINER MONTAGESCHIENE AN EINEM DACHHAKEN**
DEVICE FOR FASTENING A MOUNTING RAIL ON A ROOF HOOK
DISPOSITIF DE FIXATION D'UN RAIL DE MONTAGE SUR UN CROCHET DE TOIT

(43) Veröffentlichungstag der Anmeldung: 23.07.2014
(73) Patentinhaber: Renusol Europe GmbH, 51063 Köln (DE)
(72) Erfinder: ZSCHOCH, Stefan, 10367 Berlin (DE); KREKLOW, Steven, 13156 Berlin (DE); KÜBSCH, Michael, 16321 Bernau (DE)
(74) Vertreter: Patentanwälte Bauer Vorberg Kayser
(86) Internationale Anmeldenummer: PCT/EP2011/004647
(87) Internationale Veröffentlichungsnummer: WO 2013/037384

(56) Entgegenhaltungen:
- EP-A2- 1 826 504
- EP-A2- 2 080 965
- DE-U1-202007 003 060
- DE-U1-202009 006 367
- DE-U1-202009 007 418
- DE-U1-202010 013 976

## Beschreibung

Die vorliegende Erfindung betrifft eine Befestigungsvorrichtung, umfassend einen an einer Dachunterkonstruktion, insbesondere an einem Dachsparren, anbringbaren Dachhaken, welcher einen Kopplungsabschnitt aufweist, eine zum Aufnehmen von Lasten, beispielsweise einem Photovoltaikmodul, geeignete Montageschiene, welche wenigstens einen Gegenkopplungsabschnitt aufweist, und eine zum Verbinden der Montageschiene mit dem Dachhaken geeignete Halteranordnung, welche wenigstens eine Anzugsvorrichtung und wenigstens ein elastisches Federelement aufweist, wobei der wenigstens eine Gegenkopplungsabschnitt mit dem Kopplungsabschnitt durch Anziehen der wenigstens einen Anzugsvorrichtung in Kopplungseingriff bringbar ist, unter gleichzeitiger Beaufschlagung des wenigstens einen Federelements mit einer Spannkraft.

Eine derartige Befestigungsvorrichtung ist aus der DE 20 2009 006 367 U1 bekannt. Der Dachhaken dieser Befestigungsvorrichtung umfasst eine Grundplatte für die Befestigung des Dachhakens an der Dachunterkonstruktion, sowie einen Haltebügel für die Befestigung der Montageschiene an dem Dachhaken. Der Haltebügel weist an seinem freien Ende einen orthogonal zur Ebene der Grundplatte stehenden Verstellabschnitt auf, in dem ein ebenso gerichtetes Langloch enthalten ist. Die Montageschiene umfasst eine hinterschnittene Längsnut, deren Öffnung im montierten Zustand zu der Grundplatte des Dachhakens hinweist, wobei der dem Verstellabschnitt nähere Öffnungsrand der hinterschnittenen Längsnut als Halterrand ausgebildet ist. Dieser Halterrand kann von einem Greiffortsatz der Halteranordnung derart hintergriffen werden, dass, wenn eine Schraube, die das Langloch des Dachhakens durchsetzt und mit einer an der Halteranordnung drehsicher festgelegten Vierkantmutter in Eingriff steht, angezogen wird, die Montageschiene gegen den Verstellabschnitt des Dachhakens geklemmt wird. Anders ausgedrückt, gelangt eine als Kopplungsabschnitt wirkende Anlagefläche des Verstellabschnitts mit einer als Gegenkopplungsabschnitt wirkenden Gegenanlagefläche der Montageschiene in Kopplungseingriff. Schraube und Vierkantmutter bilden dabei gemeinsam die Anzugsvorrichtung. Ferner umfasst diese Befestigungsanordnung als elastisches Federelement eine Spiralfeder, welche sich an ihrem einen Längsende gegen den Verstellabschnitt des Dachhakens und auf ihrem anderen Längsende gegen die Halteranordnung abstützt, und welche von der Schraube durchdrungen wird.

In der DE 20 2009 006 367 U1 wird zudem vorgeschlagen, dass der als offene Haken wirkende Greiffortsatz der Halteranordnung eine Fügeschräge aufweisen kann, welche zusammen mit dem Halterrand der Montageschiene derart ausgebildet sein soll, dass die Montageschiene auch im Falle einer Schräganordnung klemmend am Greiffortsatz gehalten wird.

Das Vorsehen der Fügeschräge hat sich jedoch in der Praxis als eine nicht immer hinreichende Maßnahme erwiesen, um zu verhindern, dass vor dem Anziehen der Schraube die Montageschiene gegenüber der Halteranordnung verrutschen kann, zum Beispiel durch ihr Eigengewicht bei einer Schräganordnung auf einem Schrägdach. Rutscht die Montageschiene zu dem Dachhaken hin, gelangt der Kopplungsabschnitt des Dachhakens bereits vor dem Anziehen der Schraube mit dem Gegenkopplungsabschnitt der Montageschiene in Kopplungseingriff. Bei der in der DE 20 2009 006 367 U1 offenbarten Ausführungsform mag dies zwar keine großen Auswirkungen haben, da der Kopplungsabschnitt und der Gegenkopplungsabschnitt beide als im Wesentlichen glatte Flächen ausgebildet sind, doch kommt es zu Problemen, wenn diese beiden Abschnitte mit unebenen Profilen versehen sind, um neben einer kraftschlüssigen Verbindung auch eine formschlüssige Verbindung zwischen der Montageschiene und dem Dachhaken zu erzielen. In diesem Fall ist nämlich eine Verstellbarkeit der Halteranordnung, zusammen mit der Montageschiene, relativ zu dem Dachhaken in Erstreckungsrichtung des Langlochs nicht mehr ohne weiteres möglich.

Eine weitere aus dem Stand der Technik bekannte Befestigungsvorrichtung offenbart die EP 1 826 504 A2 umfassend einen Dachhaken, der eine Befestigungsplatte und einen im Wesentlichen parallel zur Befestigungsplatte angeordneten Festlegeabschnitt mit einem Befestigungsmittel für das Trägerprofil aufweist. Das Befestigungsmittel umfasst eine Befestigungsschraube und ein Halteelement, das einen Halteabschnitt für das Trägerprofil sowie eine Durchführöffnung für die Befestigungsschraube aufweist.
Es ist daher Aufgabe der vorliegenden Erfindung, eine Befestigungsvorrichtung der eingangs genannten Art bereitzustellen, welche die zuvor erwähnten Probleme vermeidet, d.h. welche insbesondere eine Verstellbarkeit der Montageschiene relativ zu dem Dachhaken vor dem Anziehen der Anzugsvorrichtung sicher ermöglicht.Diese Aufgabe wird durch eine Befestigungsvorrichtung der eingangs genannten Art gelöst, bei weicher die Montageschiene ferner eine hinterschnittene Längsnut mit wenigstens einem an die Öffnung der Längsnut angrenzenden und dem Inneren der Längsnut zugewandten Hinterschneidungsabschnitt aufweist, und wobei die Halteranordnung ferner wenigstens einen von ihr abstehenden Hintergreifungsabschnitt aufweist, welcher mit dem wenigstens einen Hinterschneidungsabschnitt unter Herstellung einer Verbindung zwischen Montageschiene und Halteranordnung in Eingriff bringbar ist, wobei der wenigstens eine Hintergreifungsabschnitt elastisch mit der restlichen Halteranordnung derart verbunden und ausgebildet ist, dass er sich während seiner Einführung durch die Öffnung der Längsnut unter Bildung von Rückstellkräften elastisch verformt und nach seiner vollständigen Einführung, zumindest annähernd, zu seiner Ausgangslage im Bezug auf die restliche Halteranordnung zurückkehrt.

Durch eine solche Klick- bzw. Einrastverbindung zwischen Montageschiene und Halteranordnung kann nach Herstellung dieser Verbindung eine ungewollte Relativverschiebung zwischen diesen beiden Elementen zuverlässig verhindert werden. Somit kann der Kopplungsabschnitt des Dachhakens vor der Betätigung der Anzugsvorrichtung nicht ungewollt mit dem Gegenkopplungsabschnitt der Montageschiene in Eingriff gelangen, was wiederum eine Einstellung der Halteranordnung zusammen mit der Montageschiene relativ zu dem Dachhaken erlaubt.

Ein weiterer wesentlicher Vorteil dieser Klick- bzw. Einrastverbindung besteht darin, dass der Monteur ein akustisches und/oder haptisches Signal erhält, wenn die Verbindung zwischen Montageschiene und Halteranordnung erfolgreich stattgefunden hat. Insbesondere hört er ein deutliches Klicken, wenn der elastisch mit der restlichen Halteranordnung verbundene Hintergreifungsabschnitt die Öffnung der Längsnut passiert hat und sich wieder entspannt. Bei der in der DE 20 2009 006 367 U1 offenbarten Ausführungsform, hat der Monteur dagegen keine, insbesondere keine visuelle, Möglichkeit zu überprüfen, ob eine Verbindung zwischen Montageschiene und Halteranordnung erfolgreich stattgefunden hat, d.h. ob der Halterrand vollständig unter die Fügeschräge des Greiffortsatzes geschoben worden ist. Ist dies nicht der Fall, kann die Montageschiene bei entsprechender Schräganordnung leicht wegen der mangelnden Klemmwirkung auf der Auflagefläche der Halteranordnung zu dem Dachhalter hin verrutschen.

Um sicherzustellen, dass sich der in die Längsnut eingeführte Hintergreifungsabschnitt nicht ungewollt wieder verformt, so dass sich die Verbindung zwischen Montageschiene und Halteranordnung wieder lösen kann, wird vorgeschlagen, dass der wenigstens eine Hinterschneidungsabschnitt eine, sich vorzugsweise in Längsrichtung der Montageschiene erstreckende, Vertiefung aufweist, zum Aufnehmen eines freien Endes des wenigstens einen Hintergreifungsabschnitts der Halteranordnung. Auf diese Weise umfasst der Hinterschneidungsabschnitt eine Art Widerhaken, welcher verhindert, insbesondere wenn die Anzugsvorrichtung einmal angezogen worden ist, dass sich der sich der in die Längsnut eingeführte Hintergreifungsabschnitt ungewollt wieder verformen kann.

In einer vorteilhaften Weiterbildung wird vorgeschlagen, dass die Halteranordnung zwei Hintergreifungsabschnitte aufweist. Wenn die Längsnut der Montageschiene auch zwei entsprechend ausgebildete Hinterschneidungsabschnitte aufweist, kann somit an zwei Stellen eine entsprechende Verbindung zwischen Halteranordnung und Montageschiene eingegangen werden. Das Halterelement kann dabei im Wesentlichen zu einer Spiegelebene symmetrisch ausgebildet sein, wobei auf jeder Seite dieser Spiegelebene jeweils ein Hintergreifungsabschnitt angeordnet ist. Ebenso kann auf jeder Seite ein Federelement angeordnet sein. Die beiden Hintergreifungsabschnitte können zum Beispiel jeweils an einem ersten Längsende, welches zuerst durch die Öffnung der Längsnut der Montageschiene geschoben wird, vorzugsweise integral, mit der restlichen Halteranordnung verbunden sein, wohingegen das andere, zweite Längsende, welches zuletzt durch die Öffnung der Längsnut der Montageschiene geschoben wird, jeweils ein freies Längsende ist. Dabei wird der Abstand zwischen den beiden Hintergreifungsabschnitten, in Richtung von dem ersten Längsende zu dem zweiten Ende hin immer größer, so dass die beiden Hintergreifungsabschnitte wie zwei auseinander gespreizte Flügel von der restlichen Halteranordnung abstehen.

Verjüngt sich, gesehen in einer Schnittebene orthogonal zu der Längserstreckungsrichtung der Montageschiene, die Längsnut zu der ihrer Öffnung gegenüberliegenden Seite hin, so kann sichergestellt werden, dass sich die Montageschiene nicht ohne Weiteres relativ zu der Halteranordnung auf den Dachhaken zu bewegen kann, wenn die Montageschiene mit der Halteranordnung mittels der Klickverbindung verbunden ist. Würde die Montageschiene doch relativ zu der Befestigungsanordnung in Richtung auf den Kopplungsabschnitt des Dachhalters bewegt werden, würde der Hintergreifungsabschnitt, ähnlich wie beim Durchtritt durch die Öffnung der Längsnut, elastisch verformt werden, so dass die entstehenden Rückstellkräfte dieser Bewegung entgegenwirken.

Um die Anzahl an zu fertigenden Einzelteilen und damit die Herstellungskosten möglichst gering zu halten, wird vorgeschlagen, dass der wenigstens eine Hintergreifungsabschnitt integral mit dem Halterelement ausgebildet ist.

Um eine gute strukturelle Stabilität der Montageschiene, trotz der offenen Längsnut zu erzielen, wird ferner vorgeschlagen, dass die Montageschiene zusätzlich zu der offenen Längsnut, in der Schnittebene orthogonal zu ihrer Längserstreckungsrichtung, wenigstens einen geschlossenen Profilabschnitt aufweist. Besonders einfach und in großer Stückzahl kostengünstig lässt sich die Montageschiene dabei herstellen, wenn sie als Stranggussprofil ausgebildet ist. Das Stranggussprofil kann dann je nach Bedarfsfall abgelängt werden.

Die Halteranordnung kann ein Halterelement umfassen. Um die Herstellungskosten gering zu halten, wird vorgeschlagen, dass das Halterelement als metallisches Stanz-Biege-Teil gefertigt ist. So kann für die Massenproduktion beispielsweise eine Mehrzahl von Halterelement-Rohlingen aus einem Blech ausgestanzt werden, wobei die Rohlinge anschließend einer Biegemaschiene zugeführt werden, um in die entsprechende Form des fertigen Halterelements gebracht zu werden. Auf diese Weise können auch leicht verschiedene Funktionsabschnitte der Halteranordnung integral mit dem Halterelement ausgebildet werden, was die Anzahl der Einzelteile und somit die Fertigungs- und Montagekosten reduziert. Insbesondere kann daran gedacht werden, einen Aufnahmeabschnitt zum verdrehsicheren Aufnehmen einer Mutter, welche Bestandteil der Anzugsvorrichtung ist, integral mit dem Halterelement auszubilden. Zusätzlich oder alternativ kann auch daran gedacht werden, das wenigstens ein Federelement integral mit dem Halterelement auszubilden.

Wie zuvor bereits erwähnt, kann der Kopplungsabschnitt ein unebenes Profil und der wenigstens eine Gegenkopplungsabschnitt ein dazu komplementär ausgebildetes Gegenprofil aufweisen, so dass im Kopplungszustand der beiden Abschnitte eine form- und kraftschlüssige Verbindung zwischen dem Dachhalter und der Montageschiene besteht. Bei der vorliegenden Erfindung wird hierdurch jedoch eine Verstellbarkeit der Montageschiene relativ zu dem Dachhaken sicher ermöglicht, solange die Anzugsvorrichtung noch nicht angezogen ist. Indem nicht nur eine kraftschlüssige Verbindung, wie bei der DE 20 2009 006 367 U1, sondern auch eine formschlüssige Verbindung zwischen der Montageschiene und dem Dachhaken bereitgestellt wird, können über die wenigstens eine Kopplungsstelle merklich höhere Kräfte übertragen werden. Somit kann die Montageschiene auch dann sicher an dem Dachhaken gehalten werden, wenn sie eine Längsnut aufweist, deren Öffnung einem den Kopplungsabschnitt umfassenden Abschnitt des Dachhalters zugewandt ist, so dass die Montageschiene im montierten Zustand an dem Dachhalter "hängt". Bei der in der DE 20 2009 006 367 U1 offenbarten Ausführungsform ist die Öffnung der Längsnut hingegen einer zu der Grundplatte des Dachhakens parallel orientierten Auflagefläche der Halteranordnung zugewandt, so dass die Montageschiene im montierten Zustand auf der Halteranordnung "aufliegt".

Weist der wenigstens eine Kopplungsabschnitt ein unebenes Profil auf, so kann ein Endabschnitt des wenigstens einen Federelements mit diesem Profil in Eingriff bringbar sein bzw. stehen. Somit wird nicht nur erreicht, dass sich das wenigstens eine Federelement am Dachhaken abstützen kann, sondern es wird durch eine formschlüssige Verbindung des Endabschnitts des wenigstens einen Federelements mit dem unebenen Profil des Kopplungsabschnitts des Dachhakens zugleich auch eine Verdrehsicherung für die Anzugsvorrichtung bereitgestellt, wenn diese betätigt wird.

Besonders einfach kann die Montage bewerkstelligt werden, wenn die Halteranordnung und die Montageschiene derart ausgebildet sind, dass sie durch eine lineare Relativbewegung zueinander in einer zu der Längserstreckungsrichtung der Montageschiene orthogonalen Richtung miteinander verbindbar sind. Auf diese Weise können komplizierte Bewegungsabläufe bei der Montage vermieden werden, welche auf in der Regel schräg abfallenden Dächern für den Monteur ohnehin schon unter erschwerten Bedingungen erfolgt. Je einfacher die Montage für den Monteur ist, desto sicherer kann er die Tätigkeit durchführen. Bei der in der DE 20 2009 006 367 U1 offenbarten Ausführungsform muss die Montageschiene dagegen zunächst orthogonal zu der Auflagefläche der Halteranordnung bewegt und auf diese aufgesetzt werden, um die Montageschiene dann auf der Auflagefläche zu verschieben, bis der Greiffortsatz den Halterrand hintergreift.

Wie zuvor bereits erwähnt, kann der Dachhalter ein Langloch aufweisen, welches von der Anzugsvorrichtung durchsetzt wird, so dass die Lage der Montageschiene in Längserstreckungsrichtung des Langlochs relativ zum Dachhalter einstellbar ist. Eine solche Einstellungsmöglichkeit ist zum Beispiel dann sinnvoll und nötig, wenn die Montageschiene ein Photovoltaikmodul oder ein Wärmekollektormodul aufnehmen soll, welches auch noch von weiteren, ähnlich befestigten Montageschienen gehalten wird.

Die vorliegende Erfindung wird anhand des in den Figuren beschriebenen Ausführungsbeispiels näher beschrieben werden. Es stellt dar:
- Fig. 1A: eine perspektivische Ansicht eines zu einer Halteranordnung einer erfindungsgemäßen Befestigungsvorrichtung gehörenden Halterelements,
- Fig. 1B: eine Seitenansicht des in Fig. 1A gezeigten Halterelements,
- Fig. 1C: eine Draufsicht auf das in Fig. 1A gezeigte Halterelement,
- Fig. 1 D: eine Schnittansicht des in Fig. 1A gezeigten Halterelements in der in Fig. 1C angedeuteten Schnittebene 1D - 1D,
- Fig. 2A: eine perspektivische Ansicht eines Abschnitts einer Montageschiene der erfindungsgemäßen Befestigungsvorrichtung,
- Fig. 2B: eine Schnittansicht der in Fig. 2A gezeigten Montageschiene,
- Fig. 3: eine Seitenansicht eines Dachhakens der erfindungsgemäßen Befestigungsvorrichtung,
- Fig. 4A: eine Schnittansicht, die einen ersten Montageschritt zum Montieren der Montageschiene an dem Dachhaken veranschaulicht,
- Fig. 4B: eine Schnittansicht ähnlich jener in Fig. 4A, die einen zweiten Montageschritt zum Montieren der Montageschiene an dem Dachhaken veranschaulicht,
- Fig. 4C: eine Schnittansicht ähnlich jener in Fig. 4A, die einen dritten Montageschritt zum Montieren der Montageschiene an dem Dachhaken veranschaulicht, und
- Fig. 4D: eine Schnittansicht ähnlich jener in Fig. 4A, die einen vierten Montageschritt zum Montieren der Montageschiene an dem Dachhaken veranschaulicht.

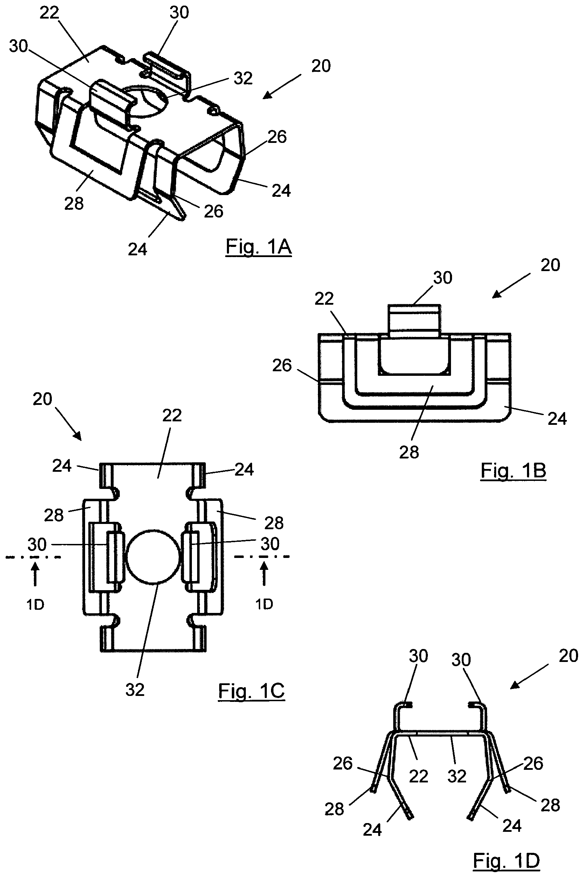

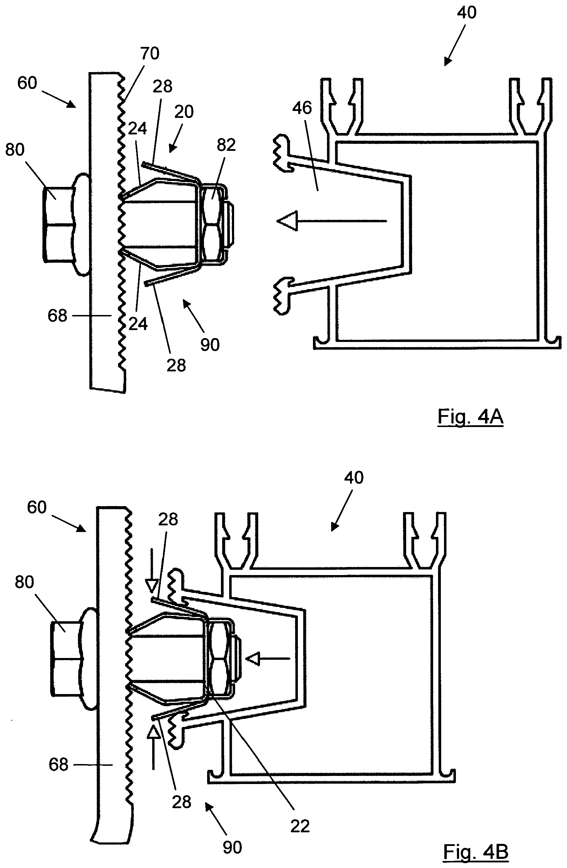

Im Folgenden sollen anhand der Fig. 1A bis 3 zunächst die wesentlichen Einzelkomponenten einer beispielhaften Ausführungsform der erfindungsgemäßen Befestigungsvorrichtung jeweils für sich beschrieben werden, bevor anhand der Fig. 4A bis 4C näher auf ihr Zusammenwirken während der Montage eingegangen wird.

Die Fig. 1A bis 1C zeigen in verschiedenen Ansichten ein Halterelement 20, welches durch Ausstanzen und Biegen aus einem flachen Blech herstellt worden ist. Somit sind alle Abschnitte des Halterelements 20 in diesem Ausführungsbeispiel integral mit diesem ausgebildet. Das Halterelement 20 weist eine zu einer Spiegelebene im Wesentlichen symmetrische Konstruktion auf. In einer Ebene orthogonal zu der Spiegelebene erstreckt sich ein Verbindungsabschnitt 22 des Halterelements 20, welcher zwei Federelemente 24 miteinander verbindet, die sich von dem Verbindungsabschnitt 22 beidseits der Spiegelebene, in Fig. 1D nach unten, erstrecken. Die beiden Federelemente 24 weisen jeweils eine im Wesentlichen U-förmige Konfiguration auf, wobei sie jeweils an den Enden der U-Form mit dem Verbindungsabschnitt 22 verbunden sind. Die Federelemente 24 weisen ferner unterhalb des Verbindungsabschnitts 22 jeweils eine Biegelinie 26 auf, so dass sie in der in Fig. 1D vertikalen Richtung gut elastisch federn können. Ein erster Abschnitt der Federelemente 24, weicher sich zwischen den Enden der U-Form und der Biegelinie 26 erstreckt, liegt, wenn das Federelement 24 nicht mit Kraft beaufschlagt ist, in einer zum Verbindungsabschnitt 22 im Wesentlichen orthogonalen Ebene. Ein zweiter Abschnitt der Federelemente 24, welcher die beiden Schenkel der jeweiligen U-Form verbindet, erstreckt sich dagegen derart in einer Ebene, dass sich die jeweiligen zweiten Abschnitte der beiden Federelemente 24 mit zunehmendem Abstand von dem Verbindungsabschnitt 22 immer weiter annähern.

Auf beiden Seiten der Spiegelebene erstreckt sich jeweils zwischen den beiden Schenkeln des entsprechenden U-förmigen Federelements 24 ein ebenfalls im Wesentlichen U-förmig ausgebildeter Hintergreifungsabschnitt 28, wobei auch hier die freien Enden der U-Form mit dem Verbindungsabschnitt 22 verbunden sind. Die Hintergreifungsabschnitte 28 weisen jedoch, anders als die Federelemente 24, unterhalb des Verbindungsabschnitts 22 keine Biegelinien auf, sondern sie erstrecken sich jeweils derart in einer Ebene, dass sich die beiden Hintergreifungsabschnitte 28 mit zunehmendem Abstand von dem Verbindungsabschnitt 22 immer weiter entfernen. Die gegenüber den Federelementen 24 merklich kleiner ausgebildeten Hintergreifungsabschnitte 28 stehen somit flügelartig auseinandergespreizt, in der Darstellung der Fig. 1D nach unten, von dem Verbindungsabschnitt 22 ab.

Auf beiden Seiten der Spiegelebene erstreckt sich, jeweils zwischen den freien Enden der beiden Schenkel des jeweiligen Hintergreifungsabschnitts 22, ein Fortsatz 30, jedoch in der Darstellung von Fig. 1D nicht nach unten, sondern nach oben von dem Verbindungsabschnitt 22. Diese beiden Fortsätze 30 sind mehrfach abgewinkelt und bilden zusammen einen Aufnahmeabschnitt zum verdrehsicheren Aufnehmen einer in den Figuren 1A bis 1D nicht dargestellten Mutter 82, die Bestandteil einer Anzugsvorrichtung ist. Genau mittig zwischen den beiden Fortsätzen 30 weist der Verbindungsabschnitt 22 ferner ein kreisrundes Loch 32 auf, welches von einem mit der Mutter in Eingriff bringbaren oder stehenden Schraubbolzen 80 durchsetzt werden kann, welcher in den Figuren 1A bis 1D ebenfalls nicht dargestellt ist und welcher ein weiterer Bestandteil der Anzugsvorrichtung ist.

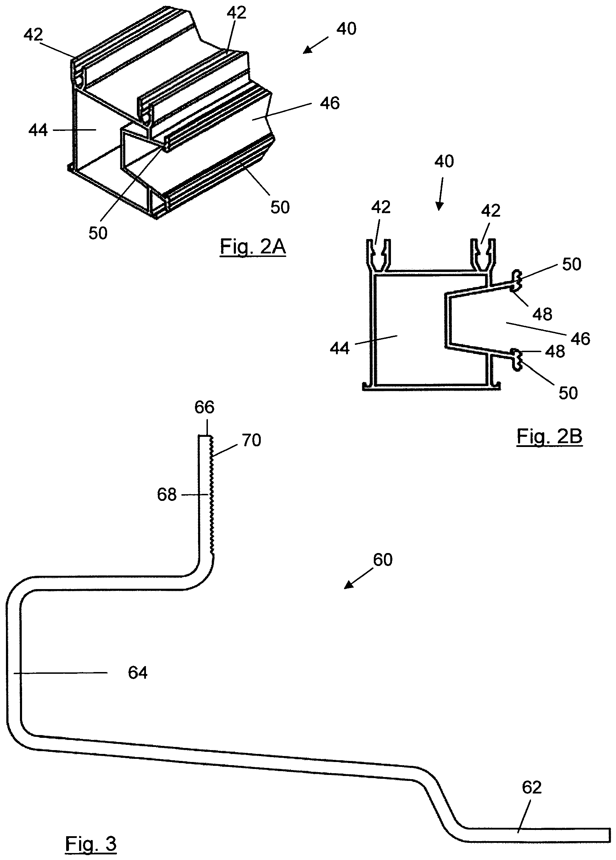

Fig. 2A zeigt eine perspektivische Ansicht eines Endabschnitts einer Montageschiene 40 und Fig. 2B stellt eine Schnittansicht der in Fig. 2A gezeigten Montageschiene 40 dar, in einer zu deren Längserstreckungsrichtung orthogonalen Schnittebene. Die Montageschiene 40 kann zum Beispiel dazu verwendet werden, um ein Photovoltaikmodul oder ein Wärmekollektormodul auf einem Gebäudedach zu befestigen. Hierzu weist die Montageschiene 40 in ihrem in Fig. 2B oberen Bereich zwei sich in Längserstreckungsrichtung der Montageschiene 40 erstreckende Haltenuten 42 auf, mit denen das Photovoltaikmodul oder ein anderer zu haltender Gegenstand in Eingriff gebracht werden kann. In dem vorliegenden Ausführungsbeispiel ist die Montageschiene vorzugsweise als Stranggussprofil ausgebildet und weist somit über ihre gesamt Länge hinweg den gleichen, in Fig. 2B dargestellten Querschnitt auf.

Wie im Querschnitt der Fig. 2B deutlich zu erkennen ist, umfasst die Montageschiene 40 neben einem geschlossenen Profilabschnitt 44, welcher insbesondere die strukturelle Stabilität der Montageschiene 40 sicherstellt und diese zum Beispiel gegen ungewollte Torsion schützt, auch einen offenen Profilabschnitt, welcher in Form einer hinterschnittenen Längsnut 46 ausgebildet ist. Die hinterschnittene Längsnut 46 umfasst ihrerseits zwei an die Öffnung der Längsnut 46 angrenzende und dem inneren der Längsnut 46 zugewandte Hinterschneidungsabschnitte 48, welche mit den beiden Hintergreifungsabschnitten 28 des in den Figuren 1A bis 1D dargestellten Halterelements 20 unter Herstellung einer Verbindung zwischen Montageschiene 40 und einer Halteranordnung 90 in Eingriff bringbar sind, wie nachfolgend noch näher beschrieben wird. Benachbart zu den beiden Hinterschneidungsabschnitten 48 ist jeweils ein Gegenkopplungsabschnitt 50 vorgesehen, dessen von dem Inneren der hinterschnittenen Längsnut 46 wegweisende Oberfläche ein unebenes, sägezahnartiges Profil aufweist. Die Gegenkopplungsabschnitte 50 sind ausgebildet, um mit einem entsprechenden Kopplungsabschnitt 70 an einem Dachhaken 60, der nachfolgend noch näher beschrieben wird, in Koppeleingriff zu gelangen bzw. zu stehen. In der Schnittansicht von Fig. 2B ist die hinterschnittene Längsnut 46 im Wesentlichen U-förmig ausgebildet, wobei die beiden Schenkel der U-Form nicht parallel zueinander verlaufen, sondern sich immer mehr voneinander entfernen, je weiter sie sich der Öffnung der U-Form nähern.

Fig. 3 zeigt in einem gegenüber jenem der Fig. 2B verkleinerten Maßstab eine Schnittansicht eines Dachhakens 60. Der Dachhaken 60 umfasst eine Grundplatte 62, mit welcher er an einer nicht dargestellten Dachunterkonstruktion, insbesondere an einem Dachsparren, befestigt werden kann, sowie einen Haltebügel 64, welcher entsprechend der Form einer Dachabdeckung, beispielsweise eines Dachziegels, mehrfach gebogen ist, und welcher der Befestigung der Montageschiene an dem Dachhaken dient. Der Haltebügel 64 weist an seinem freien Ende 66 einen etwa orthogonal zur Ebene der Grundplatte 62 stehenden Verstellabschnitt 68 auf, in dem ein ebenso gerichtetes, in den Figuren jedoch nicht dargestelltes Langloch vorgesehen ist. Ferner umfasst der Verstellabschnitt 68 den zuvor bereits erwähnten Kopplungsabschnitt 70 mit einem unebenen Profil an seiner Oberfläche, welches komplementär zu dem Profil des Gegenkopplungsabschnitts 50 der Montageschiene 40 ausgebildet ist.

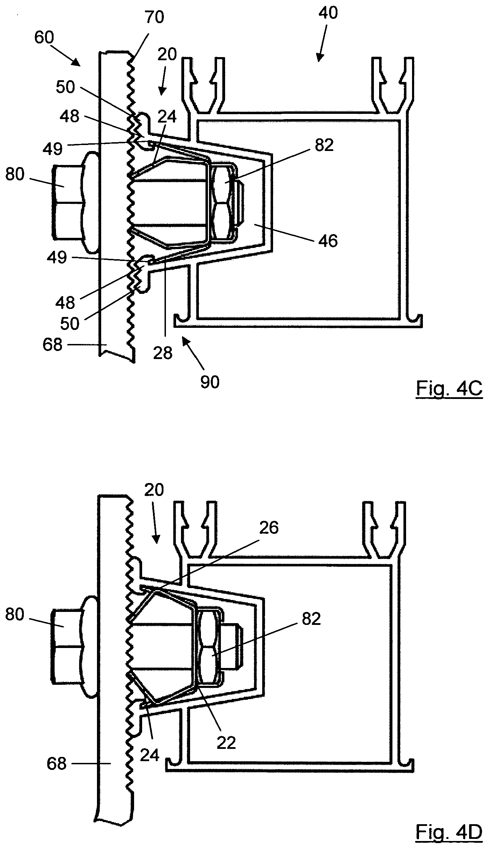

Die Figuren 4A bis 4D zeigen in chronologischer Folge verschiedene Zustände während der Befestigung der Montageschiene 40 an dem Dachhaken 60. In einem in Fig. 4A dargestellten Ausgangszustand ist das Halterelement 20 an dem Verstellabschnitt 68 des Dachhakens 60 bereits vormontiert. Hierzu ist ein Schraubbolzen 80 durch das in den Figuren nicht dargestellte Langloch im Verstellabschnitt 68 des Dachhakens 60 und durch das kreisrunde Loch 32 im Verbindungsabschnitt 22 des Halterelements 20 geführt worden und steht in Gewindeeingriff mit einer Mutter 82, die verdrehsicher von den Fortsätzen 30 des Halterelements 20 aufgenommen worden ist, welche den Aufnahmeabschnitt bildenden. Das Halterelement 20, der Schraubbolzen 80 und die Mutter 82 bilden zusammen eine Halteranordnung 90. Endabschnitte der Federelemente 24 des Halterelements 20 stehen dabei mit dem unebenen Profil des Kopplungsabschnitts 70 des Dachhakens 60 in Eingriff und verhindern somit, dass sich das Halteelement 20 beim Anziehen des Schraubbolzens 80 gegenüber dem Dachhaken 60 verdrehen kann. Im in Fig. 4A dargestellten Ausgangszustand ist die Anzugsvorrichtung, welche den Schraubbolzen 80 und die Mutter 82 umfasst, nur leicht angezogen, so dass die Federelemente 24 des Halterelements 20 kaum verformt sind. Dieses leichte Anziehen reicht jedoch bereits aus, um das Eigengewicht der Halteranordnung 90 und das der unbelasteten Montageschiene 40 an dem Dachhaken 60 sicher halten zu können. Es sei an dieser Stelle angemerkt, dass, wenn in der vorliegenden Anmeldung allgemein von "Anziehen" die Rede ist, damit das eigentliche Festziehen gemeint ist, um in den in Fig. 4D dargestellten Endzustand zu gelangen, und nicht das "leichte Anziehen", um in den in Fig. 4A dargestellten Ausgangszustand zu gelangen.

Wie in Fig. 4A durch den horizontalen Bewegungspfeil angedeutet ist, kann in diesem Ausgangszustand die Montageschiene 40 als nächstes durch eine lineare Bewegung auf die Halteranordnung 90 geschoben werden. Während dieser Bewegung ist die Öffnung der hinterschnittenen Längsnut 46 der Halteranordnung 90 zugewandt ist, wobei diese Öffnung orthogonal zur Längserstreckungsrichtung der Montageschiene 40 kleiner ist als der weiteste Abstand der beiden Hintergreifungsabschnitte 28, die flügelartig auseinandergespreizt von dem Verbindungsabschnitt 22 des Halterelements 20 abstehen. Wie in Fig. 4B durch weitere Bewegungspfeile angedeutet ist, werden die Hintergreifungsabschnitte 28 des Halterelements 20 in Richtung aufeinander zu elastisch zusammengedrückt, wenn sie in Kontakt mit dem Öffnungsrand der hinterschnittenen Längsnut 46 der Montageschiene 40 gelangen und die Montageschiene 40 weiter in Richtung auf den Kopplungsabschnitt 70 des Dachhakens 60 zu bewegt wird. Die elastische Verformung der Hintergreifungsabschnitte 28 findet insbesondere an den Stellen statt, an denen die Hintergreifungsabschnitte 28 mit dem Verbindungsabschnitt 22 des Halterelements 20 verbunden sind.

Wie in Fig. 4C gezeigt, kehren die elastisch verformten Hintergreifungsabschnitte 28 wegen der auf sie wirkenden Rückstellkräfte annährend in ihre Ausgangslage relativ zum restlichen Halterelement 20 zurück, sobald sie vollständig durch die Öffnung der hinterschnittenen Längsnut 46 der hinterschnittenen Montageschiene 40 geführt worden sind. Hierbei kommt es zu einem deutlich vernehmbaren Klick-Geräusch, weswegen diese Art der Verbindung auch "Klickverbindung" genannt wird. Dieses Geräusch hilft dem Monteur, zuverlässig zu erkennen, wann bzw. ob die Montageschiene 40 mit der Halteranordnung 90 richtig in Eingriff gebracht worden ist. In der Regel kann er die Bewegung der zurückfedernden Hintergreifungsabschnitte 28 auch haptisch wahrnehmen, d.h. spüren, wenn er die Montageschiene hält. Diese Möglichkeit des zuverlässigen Erkennens dieser Verbindung ist daher besonders vorteilhaft, weil dem Monteur während der Montage der Blick auf die Verbindungsstelle zwischen Halteranordnung 90 und Montageschiene 40 in der Regel verwehrt ist. Die beiden Hinterscheidungsabschnitte 48 der Montageschiene 40 verhindern, zusammen mit den Hintergreifungsabschnitten 28 des Halterelements 20, welche wie zwei Widerhaken wirken, dass das Halterelement 20 ungewollt wieder aus der hinterschnittenen Längsnut 46 der Montageschiene 40 herausrutschen kann. Die Hinterschneidungsabschnitte 48 der Montageschiene 40 umfassen zudem jeweils eine sich in Längsrichtung der Montageschiene erstreckende Vertiefung 49, welche geeignet ist, ein freies Ende des jeweiligen Hintergreifungsabschnitts 28 des Halterelements 20 aufzunehmen, was weiter dazu beiträgt, dass eine sichere Verbindung zwischen der Halteranordnung 90 und der Montageschiene 40 erzielt werden kann.

Solange die Anzugsvorrichtung, welche den Schraubbolzen 80 und die Mutter 82 umfasst, nicht weiter angezogen, d.h. festgezogen wird, oder mit Gewalt die Montageschiene 40 weiter in Richtung auf den Kopplungsabschnitt 70 des Dachhakens 60 gedrückt wird, verhindern die beiden elastisch verformbaren Hintergreifungsabschnitte 28 des Halterelements 20 im Zusammenspiel mit der hinterschnittenen Längsnut 46, die sich in der Schnittebene orthogonal zu der Längserstreckungsrichtung der Montageschiene 40 zu der ihrer Öffnung gegenüberliegenden Seite hin verjüngt, dass die beiden Gegenkoppiungsabschnitte 50 der Montageschiene 40 mit dem Kopplungsabschnitt 70 des Dachhakens 60 in Kopplungseingriff gelangen können. Würde in dem in Fig. 4C dargestellten Zustand die Montageschiene weiter in Richtung auf den Kopplungsabschnitt 70 des Dachhakens 60 zu bewegt werden, so würden die Hintergreifungsabschnitte 28 wieder aufeinander zu zusammengedrückt werden. Die dabei entstehenden elastischen Rückstellkräfte an den Hintergreifungsabschnitten 28 wirken dieser Bewegung jedoch entgegen. Die Tatsache, dass in dem in Fig. 4C gezeigten Zustand ein Abstand zwischen dem Kopplungsabschnitt 70 des Dachhakens 60 und den entsprechenden Gegenkopplungsabschnitten 50 der Montageschiene 40, selbst bei einer eventuellen Schräganordnung auf einem Schrägdach, zuverlässig erzielt wird, ermöglicht dem Monteur, auf einfache Weise eine Höhenverstellung der Montageschiene 40 relativ zu dem Verstellabschnitt 68 des Dachhakens 60 vornehmen zu können. Hierzu muss er lediglich die Anzugsvorrichtung leicht lösen, so dass die freien Enden der Federelemente 24 nicht mehr im Eingriff mit dem Kopplungsabschnitt 70 des Dachhakens 60 stehen, um dann die Halteranordnung 90 zusammen mit der daran befestigten Montageschiene 40 entlang der Erstreckungsrichtung des nicht dargestellten Langlochs im Verstellabschnitt 68 des Dachhakens 60 auf eine gewünschte Position zu verschieben. Ist die gewünschte Position erreicht, kann die Anzugsvorrichtung dann wieder leicht angezogen, um zunächst den in Fig. 4C gezeigten Zustand zu erreichen.

Anschließend kann die Anzugsvorrichtung weiter angezogen, d.h. festgezogen werden, um den in Fig. 4D dargestellten Endzustand zu erreichen. Bei dem Anziehen der Anzugsvorrichtung nähert sich der Verbindungsabschnitt 22 des Halterelements 20 durch die Relativbewegung der Mutter 82 gegenüber dem Schraubbolzen 80 immer weiter dem Verstellabschnitt 68 des Dachhakens 60 an. Hierbei "knicken" die Federelemente 24 entlang ihrer jeweiligen Biegelinie 26 elastisch nach außen, d.h. die Biegelinien 26 der beiden Federelemente 24 bewegen sich voneinander weg. Die dadurch erzeugte Rückstellkraft der Federelemente 24 verhindert, dass sich die Mutter 82 später ungewollt relativ zu dem Schraubbolzen 80 bewegen kann. Die integral mit dem Verbindungsabschnitt 22 verbundenen Hintergreifungsabschnitte 28 des Halterelements 20 bewegen sich dabei ebenfalls auf den Verstellabschnitt 68 des Dachhakens 60 zu, wobei sie über die Hinterschneidungsabschnitte 48 die Montageschiene 40 mitnehmen. Diese Bewegung erfolgt so lange, bis die beiden Gegenkopplungsabschnitte 50 der Montageschiene 40 in Kopplungseingriff mit dem Kopplungsabschnitt 70 des Dachhakens 60 gelangt sind. Beim Anziehen der Anzugsvorrichtung werden auch die freien Enden der Hintergreifungsabschnitte 28 des Halterelements 20 in die Vertiefungen 49 an den Hinterschneidungsabschnitten 48 der Montageschiene 40 gedrückt, so dass eine sehr sichere Verbindung zwischen diesen Komponenten erzielt werden kann. Da ferner der Kopplungsabschnitt 70 des Dachhalters 60 eine sägezahnförmige Oberfläche und die Gegenkopplungsabschnitte 50 der Montageschiene 40 entsprechend komplementär dazu ausgebildete Oberflächen aufweisen, wird im in Fig. 4D dargestellten Endzustand nicht nur eine kraft-, sondern auch eine formschlüssige Verbindung zwischen diesen Abschnitten erzielt.

Die erfindungsgemäße Verbindungsvorrichtung zeichnet sich insbesondere dadurch aus, dass die Montage sehr einfach erfolgen kann, und dass sich bei der Montage eine besonders sichere Verbindung der Einzelteile erzielen lässt.

## Patentansprüche

1. Befestigungsvorrichtung umfassend:
- einen an einer Dachunterkonstruktion, insbesondere an einem Dachsparren, anbringbaren Dachhaken (60), welcher einen Kopplungsabschnitt (70) aufweist,
- eine zum Aufnehmen von Lasten, beispielsweise einem Photovoltaikmodul, geeignete Montageschiene (40), welche wenigstens einen Gegenkopplungsabschnitt (50) aufweist, und
- eine zum Verbinden der Montageschiene (40) mit dem Dachhaken (60) geeignete Halteranordnung (90), welche wenigstens eine Anzugsvorrichtung (80, 82) und wenigstens ein elastisches Federelement (24) aufweist,
wobei der wenigstens eine Gegenkopplungsabschnitt (50) mit dem Kopplungsabschnitt (70) durch Anziehen der wenigstens einen Anzugsvorrichtung (80, 82) in Kopplungseingriff bringbar ist, unter gleichzeitiger Beaufschlagung des wenigstens einen Federelements (24) mit einer Spannkraft,
wobei die Montageschiene (40) ferner eine hinterschnittene Längsnut (46) mit wenigstens einem an die Öffnung der Längsnut (46) angrenzenden und dem Inneren der Längsnut (46) zugewandten Hinterschneidungsabschnitt (48) aufweist, und wobei die Halteranordnung (90) ferner wenigstens einen von ihr abstehenden Hintergreifungsabschnitt (28) aufweist, welcher mit dem wenigstens einen Hinterschneidungsabschnitt (48) unter Herstellung einer Verbindung zwischen Montageschiene (40) und Halteranordnung (90) in Eingriff bringbar ist,
**dadurch gekennzeichnet, dass** der wenigstens eine Hintergreifungsabschnitt (28) elastisch mit der restlichen Halteranordnung (90) derart verbunden und ausgebildet ist, dass er sich während seiner Einführung durch die Öffnung der Längsnut (46) unter Bildung von Rückstellkräften elastisch verformt und nach seiner vollständigen Einführung, zumindest annähernd, zu seiner Ausgangslage im Bezug auf die restliche Halteranordnung (90) zurückkehrt.

2. Befestigungsvorrichtung nach Anspruch 1,
**dadurch gekennzeichnet, dass** der wenigstens eine Hinterschneidungsabschnitt (48) eine, sich vorzugsweise in Längsrichtung der Montageschiene (40) erstreckende, Vertiefung (49) aufweist, zum Aufnehmen eines freien Endes des wenigstens einen Hintergreifungsabschnitts (28) der Halteranordnung (90).

3. Befestigungsvorrichtung nach Anspruch 1 oder 2,
**dadurch gekennzeichnet, dass** die Halteranordnung (90) zwei Hintergreifungsabschnitte (28), und vorzugsweise auch zwei Federelemente (24), aufweist.

4. Befestigungsvorrichtung nach einem der Ansprüche 1 oder 3,
**dadurch gekennzeichnet, dass** sich, in der Schnittebene orthogonal zu der Längserstreckungsrichtung der Montageschiene (40), die Längsnut (46) zu der ihrer Öffnung gegenüberliegenden Seite hin verjüngt.

5. Befestigungsvorrichtung nach einem der Ansprüche 1 bis 4, **dadurch gekennzeichnet, dass** die Halteranordnung (90) ein Halterelement (20) umfasst, welches vorzugsweise als metallisches Stanz-Biege-Teil gefertigt ist und dass der wenigstens eine Hintergreifungsabschnitt (28) integral mit dem Halterelement (20) ausgebildet ist.

6. Befestigungsvorrichtung nach einem der Ansprüche 1 bis 5,
**dadurch gekennzeichnet, dass** die Montageschiene (40) zusätzlich zu der offenen Längsnut (46), in der Schnittebene orthogonal zu ihrer Längserstreckungsrichtung, wenigstens einen geschlossenen Profilabschnitt (44) aufweist und vorzugsweise als Stranggussprofil ausgebildet ist.

## Claims

1. A fastening device, comprising
- a roof hook (60), which can be attached to a roof substructure, in particular a rafter, and which has a coupling portion (70),
- a mounting rail (40), which is suitable for accepting loads, for example a photovoltaic module, and which has at least one counter-coupling portion (50), and
- a retainer assembly (90), which is suitable for connecting the mounting rail (40) to the roof hook (60), and which has at least one tightening device (80, 82) and at least one elastic spring member (24),
wherein the at least one counter-coupling portion (50) can be brought into coupling engagement with the coupling portion (70) by tightening the at least one tightening device (80, 82) while simultaneously applying a tensioning force to the at least one spring member (24),
wherein the mounting rail (40) further has an undercut longitudinal groove (46) with at least one undercut portion (48) adjacent to the opening of the longitudinal groove (46) and facing towards the interior of the longitudinal groove (46), and wherein the retainer assembly (90) further has at least one engagement portion (28), which protrudes therefrom and which can be brought into engagement with the at least one undercut portion (48) while producing a connection between the mounting rail (40) and the retainer assembly (90),
**characterized in that** the at least one engaging portion (28) is elastically connected to the rest of the retainer assembly (90) and configured in such a manner that, while being inserted through the opening of the longitudinal groove (46), it is elastically deformed, forming restoring forces, and returns, at least approximately, into its initial position relative to the rest of the retainer assembly (90) after having been inserted completely.

2. The fastening device according to claim 1,
**characterized in that** the at least one undercut portion (48) has a depression (49), which preferably extends in the longitudinal direction of the mounting rail (40), for receiving a free end of the at least one engaging portion (28) of the retainer assembly (90).

3. The fastening device according to claim 1 or 2,
**characterized in that** the retainer assembly (90) has two engaging portions (28), and preferably also two spring members (24).

4. The fastening device according to any one of claims 1 or 3,
**characterized in that**, in the sectional plane orthogonal to the direction of the longitudinal extent of the mounting rail (40), the longitudinal groove (46) tapers towards the side opposite to its opening.

5. The fastening device according to any one of claims 1 to 4,
**characterized in that** the retainer assembly (90) comprises a retainer member (20), which is preferably manufactured as a metallic stamped bent part, and that the at least one engaging portion (28) is integrally formed with the retainer member (20).

6. The fastening device according to any one of claims 1 to 5,
**characterized in that** the mounting rail (40), in addition to the open longitudinal groove (46), has at least one closed profile section (44) in the sectional plane orthogonal to the direction of its longitudinal extent and is preferably formed as a continuously cast profile.

## Revendications

1. Dispositif de fixation comprenant:
- un crochet de toit (60) qui peut être monté sur une sous-structure de toit, en particulier sur un chevron, et qui présente une section de couplage (70),
- un rail de montage (40) qui est apte à recevoir des charges, par exemple un module photovoltaïque et qui présente au moins une contre-section de couplage (50), et
- un agencement de support (90) qui est adapté pour relier le rail de montage (40) au crochet de toit (60) et qui comprend au moins un dispositif de serrage (80, 82) et au moins un élément formant ressort (24) élastique,
dans lequel ladite au moins une contre-section de couplage (50) peut être mise en prise de couplage avec la section de couplage (70) en serrant ledit au moins un dispositif de serrage (80, 82), tout en appliquant une force de tension audit au moins un élément formant ressort (24),
dans lequel ledit rail de montage (40) comprend en outre une rainure longitudinale (46) contre-dépouillée avec au moins une section en contre-dépouille (48) contiguë à l'ouverture de la rainure longitudinale (46) et montrant vers l'intérieur de la rainure longitudinale (46), et dans lequel ledit agencement de support (90) présente en outre au moins une section à engagement de derrière (28) qui en fait saillie et qui peut être mise en prise avec ladite au moins une section en contre-dépouille (48) tout en réalisant une liaison entre le rail de montage (40) et l'agencement de support (90),
**caractérisé par le fait que** ladite au moins une section à engagement de derrière (28) est reliée élastiquement au reste de l'agencement de support (90) et conçue de telle sorte qu'elle se déforme élastiquement avec formation de forces de rappel, pendant qu'elle est introduite à travers l'ouverture de la rainure longitudinale (46), et que, après son introduction complète, elle revient, au moins approximativement, à sa position initiale par rapport au reste de l'agencement de support (90).

2. Dispositif de fixation selon la revendication 1, **caractérisé par le fait que** ladite au moins une section en contre-dépouille (48) présente une cavité (49) s'étendant de préférence dans la direction longitudinale du rail de montage (40) et destinée à recevoir une extrémité libre de ladite au moins une section à engagement de derrière (28) de l'agencement de support (90).

3. Dispositif de fixation selon la revendication 1 ou 2, **caractérisé par le fait que** l'agencement de support (90) présente deux sections à engagement de derrière (28), et de préférence également deux éléments formant ressort (24).

4. Dispositif de fixation selon l'une quelconque des revendications 1 ou 3, **caractérisé par le fait que**, dans le plan de coupe orthogonal à la direction d'extension longitudinale du rail de montage (40), la rainure longitudinale (46) se rétrécit vers le côté situé en regard de son ouverture.

5. Dispositif de fixation selon l'une quelconque des revendications 1 à 4, **caractérisé par le fait que** l'agencement de support (90) comprend un élément de support (20) qui, de préférence, est réalisé en tant que pièce métallique estampée et pliée et que ladite au moins une section à engagement de derrière (28) est réalisée d'un seul tenant avec l'élément de support (20).

6. Dispositif de fixation selon l'une quelconque des revendications 1 à 5, **caractérisé par le fait que**, en plus de la rainure longitudinale (46) ouverte, le rail de montage (40) présente au moins une section de profilé (44) fermée dans le plan de coupe orthogonal à sa direction d'extension longitudinale, et est conçu de préférence en tant que profilé de coulée continue.
